# EUROPÄISCHE PATENTSCHRIFT

(11) **EP 0 973 600 B1**
(45) Veröffentlichungstag und Bekanntmachung des Hinweises auf die Patenterteilung: **19.11.2003**
(21) Anmeldenummer: 98920450.8
(22) Anmeldetag: 31.03.1998
(51) Int. Cl.: B01D 53/26, B01D 53/22, B01D 65/00, B01D 63/02, B01D 63/10

(54) **VORRICHTUNG ZUM FILTERN UND TRENNEN VON FLÜSSIGEN UND GASFÖRMIGEN MEDIEN UND/ODER ZUM TROCKNEN GASFÖRMIGER MEDIEN**
DEVICE FOR FILTERING AND SEPARATING LIQUID AND GASEOUS MEDIA AND/OR DRYING GASEOUS MEDIA
DISPOSITIF POUR LE FILTRAGE ET LA SEPARATION DE MILIEUX LIQUIDES ET GAZEUX ET/OU POUR LE SECHAGE DE MILIEUX GAZEUX

(30) Priorität: 11.04.1997 DE 19716752
(43) Veröffentlichungstag der Anmeldung: 26.01.2000
(73) Patentinhaber: GKSS-Forschungszentrum Geesthacht GmbH, 21502 Geesthacht (DE); ultratroc gmbh Drucklufttechnik, 24941 Flensburg (DE)
(72) Erfinder: PLONSKI, Michael, D-24944 Flensburg (DE); WALDEMANN, Rudolf, D-21481 Lauenburg (DE); KNEIFEL, Klemens, D-21502 Geesthacht (DE); OHLROGGE, Klaus, D-21502 Geesthacht (DE); KOLL, Joachim, D-22115 Hamburg (DE); HASLER, Carsten, D-22049 Hamburg (DE)
(74) Vertreter: Klickow, Hans-Henning
(86) Internationale Anmeldenummer: DE9800913
(87) Internationale Veröffentlichungsnummer: WO98046333

(56) Entgegenhaltungen:
- EP-A- 0 356 177
- EP-A- 0 669 158
- EP-A- 0 709 123
- DE-A- 4 401 014
- FR-A- 2 751 894
- US-A- 3 735 558
- US-A- 5 605 564

## Beschreibung

Die Erfindung betrifft eine Vorrichtung zum Filtern und Trennen von flüssigen und gasförmigen Medien und/oder zum Trocknen von gasförmigen Medien unter Anwendung von Membranen, umfassend ein Gehäuse mit einem Einlaß für das zu trennende Medium, einen Auslaß für das Retentat sowie einen Permeatauslaß, wobei im Gehäuseinnenraum ein Membrankörper angeordnet ist, dessen beide Enden mit jeweils einem Verschlußkörper begrenzbar sind, und wobei ein Teilstrom des vorrichtungsseitig erzeugbaren Retentats zur Erzeugung eines Unterdrucks der Membran permeatseitig zuführbar ist und bei der wenigstens einer der Verschlußkörper, in welchem der Retentatauslaß angeordnet ist, eine verschlußkörperseitige Verbindungsleitung aufweist, die den Teilstrom des Retentats aufnimmt, der vom Retentataustrittsbereich aus dem Membrankörper zum Gehäuseinnenraum strömt, in den das Permeat eintritt.

Eine Vorrichtung dieser Art ist unter der Bezeichnung "DRYPOINT" des Herstellers BEKO Kondensationstechnik GmbH, 41468 Neuss, bekannt.

Allgemein gilt, daß für die Trocknung von Gasströmen, beispielsweise Druckluft, Membranmodule eingesetzt werden, beispielsweise in Form von Hohlfadenmembranen. Die feuchte Druckluft strömt dabei durch das Lumen der in Form eines Bündels angeordneten Hohlfadenmembranen. Der prinzipielle Aufbau einer derartigen Vorrichtung ist durch die DE-OS 44 01 014 bekannt. Durch geeignete Membranen permeiert bevorzugt wasserdampf, wobei die Luft weitgehend zurückgehalten wird. Am Ende der Verfahrensstrecke tritt getrocknete Druckluft als Retentat aus. Auf der Abströmseite der Membranen tritt als Permeat Wasserdampf aus, der ständig abgeführt werden muß, um die als treibende Kraft wirkende Partialdruckdifferenz aufrechtzuerhalten. Hierzu kann mit Hilfe einer vakuumpumpe ein Unterdruck erzeugt werden oder es wird ein Spülgasstrom, vorzugsweise im Gegenstrom, durch den Permeatraum des Moduls geführt. Als Spülgas kann ein externes, trockenes Gas, beispielsweise Stickstoff oder ein Teil des durch wasserdampfpermeation getrockneten Gasstroms, der das Retentat bildet, eingesetzt werden.

Aus der EP-A-0 669 158 ist bereits eine Membranvorrichtung bekannt, bei der ein Hohlfädenbündel um ein teilweise perforiertes Kernrohr herum angeordnet ist. Das Bündel der Hohlfäden ist im wesentlichen Bereich seiner Ausdehnung von einer nichtpermeablen Hülle umgeben. Die Enden des Hohlfädenbündels sind in Verschlußteilen eingegossen. In einem der hierdurch gebildeten Vergußblöcke ist eine Spülgasregelung angeordnet. Die Vergußblöcke sind stopfenartig in ein rohrartiges Gehäuse der Membranvorrichtung eingesetzt. Im Bereich des retentatseitigen Verschlußkörpers ist eine Verbindungsleitung vorgesehen, die einen Teilstroms des Retentats aufnimmt. Dieser Teilstrom des Retentats wird in den Bereich des Gehäuseinnenraumes geleitet, in den das Permeat eintritt.

Aus der EP-A-0 709 123 ist ebenfalls eine Membranvorrichtung mit einem rohrförmigen Gehäuse bekannt, in das im Bereich von Gehäuseenden stopfenartig Vergußblöcke eingesetzt sind, die die Membranelemente haltern.

Beim Betrieb mit Unterdruck auf der Permeatseite können grundsätzlich sehr tiefe Taupunkttemperaturen erreicht werden, nachteilig ist dabei aber der zusätzliche Energiebedarf und erhöhte Investitionskosten. Der Spülgasbetrieb unter Verwendung eines externen Spülgases, beispielsweise Stickstoff, ist aus Kostengründen in der Regel unwirtschaftlich.

Sind extreme Taupunktabsenkungen nicht gefordert, hat sich die Rückführung eines auf Umgebungsdruck entspannten Teiles des Retentats als günstiges Verfahren erwiesen. Es werden dabei weder zusätzliche Energie noch Apparate benötigt.

Die Rückführung des benötigten Retentatstromanteils wird bei dem bekannten Modulsystem "DRYPOINT" durch eine außen an einem Verschlußkörper oder Endkörper angebrachte Spülluftleitung mit Einstellventil bewirkt. Eine weitere Möglichkeit ist die Verwendung relativ "offener" Membranen, bei denen neben Wasserdampf auch soviel Luft durch die Membranen permeiert, wie für den Abtransport zumindest eines Teils der Wassermoleküle auf der Permeatseite benötigt wird (interne Spülung). Ein Nachteil dieser internen Spülung ist, daß eine Verfahrensführung im Gegenstrom nicht möglich ist und daß der Spülgasstrom nicht geregelt werden kann.

Nachteilig bei den bekannten Vorrichtungen ist auch, daß beispielsweise bei im Vergußblock eingebrachten Kapillaren oft ungleiche Strömungsverteilungen auftreten, wobei als weiterer Nachteil hinzukommt, daß eine nachträgliche Anpassung des Spülgasstromes (einstellen des Stufenschnittes) nicht möglich ist. Weiterhin ist auch der mit dem Anordnen und Verkleben der Kapillaren verbundene Arbeitsaufwand nachteilig, wobei eine Spülgaszuführung über eine externe Schlauchverbindung, wie Sie beispielsweise im Stand der Technik zwischen Retentat- und Permeatraum verwendet wird, ebenfalls äußerst nachteilig ist, da zusätzliche Anschlußstücke und Drosselmittel benötigt werden.

Es ist somit Aufgabe der vorliegenden Erfindung, eine Vorrichtung der eingangs genannten Art zu schaffen, mit der auf sehr effektive weise ein Filtern und Trennen von flüssigen und gasförmigen Medien sowie ein Trocknen gasförmiger Medien möglich ist, ohne daß externe Mittel vorgesehen werden müssen und die in wenigen konventionellen Herstellungsschritten, wie sie bei bisher üblichen Vorrichtungen dieser Art angewendet werden, hergestellt werden kann, wobei auch ohne Schwierigkeiten eine nachträgliche Anpassung des Spülgasstromes möglich sein soll und die Vorrichtung einfach und kostengünstig herstellbar sowie einfach einsetzbar sein soll.

Gelöst wird die Aufgabe gemäß der Erfindung dadurch, daß wenigstens einer der Verschlußkörper in welchem der Retentatauslaß angeordnet ist, zwei verschlußkörperseitige Verbindungsleitungen aufweist, die den Teilstrom des Retentats aufnehmen, der vom Retentataustrittsbereich aus dem Membrankörper zum Gehäuseinnenraum strömt, in den das Permeat eintritt, wobei in der einen Verbindungsleitung ein Strömungssensor angeordnet ist.

Der vorteil der erfindungsgemäßen Lösung besteht im wesentlichen darin, daß diese Vorrichtung auf einfache Weise hergestellt werden kann, wobei die im Stand der Technik bereits beschriebenen Erfindungsprinzipien bei der jetzigen erfindungsgemäßen Vorrichtung nicht verlassen werden müssen und wobei die Vorrichtung auch vollständig zusätzliche äußere Mittel wie Anschlußstücke oder Drosselmittel vermeidet und mit der, wie angestrebt, auf sehr einfache Weise eine nachträgliche Anpassung des Spülgasstromes, beispielsweise durch entsprechende Beeinflussung des Querschnittes der im verschlußkörper ausgebildeten Verbindungsleitung für den rückgeführten Retentatteilstrom, möglich ist. Insbesondere verhindert die erfindungsgemäße Vorrichtung, daß im Teillast- und im Nullastfall, d.h. bei der Aufgabe eines Feedstromes, der geringer als der des Nennzustandes ist, unnötige Retentatverluste auftreten.

Der Membrankörper selbst kann grundsätzlich aus beliebigen geeigneten Membranen bestehen, vorzugsweise zum Beispiel aus einer Mehrzahl von Hohlfadenmembranen, es ist aber auch vorteilhafterweise möglich, den Membrankörper aus aufgewickelten Flachmembranen, die als Wickelmembranen oder, etwas unscharf, Wickelmodule bezeichnet werden, zu bilden. Für den bestimmungsgemäßen Betrieb der Vorrichtung ist es allerdings unwichtig, wie die Membranen im einzelnen aufgebaut sind. Festzuhalten bleibt, daß allerdings der im Gehäuseinnenraum positionierte Membrankörper diesen im wesentlichen vollständig durchqueren kann, beispielsweise auch als rohrförmig ausgebildeter Membrankörper.

Vorteilhafterweise ist in die Verbindungsleitung ein mittels nach Art eines Ventils wirkendes Verstellmittel eingesetzt, mit dem beispielsweise auf sehr einfache Weise eine auf den jeweiligen Anwendungsfall angepaßte Einstellung des Spülgasstromes, d.h. das Einstellen des Stufenschnittes, möglich ist. Dieses Verstellmittel kann beispielsweise von außen betätigt werden.

Vorteilhafterweise wird das Verstellmittel durch eine Gewindeschraube gebildet, die in einen in einer Bohrung entsprechend ausgebildeten Gewindesitz im Verschlußkörper eingreift, so daß durch Drehung der Gewindeschraube mit einem Schraubendreher oder dergleichen eben diese Anpassung des Spülgasstromes durch entsprechende Querschnittsveränderung der Verbindungsleitung möglich ist. Bei einer sehr einfachen aber dennoch sehr wirksamen Ausgestaltung der Vorrichtung wird das Verstellmittel durch eine selbstschneidende Gewindeschraube gebildet, die im Stand der Technik mit "Knipping-Schraube" bezeichnet wird. Es ist somit bei Einsatz dieser Gewindeschraube das Schneiden eines Gewindes im Verschlußkörper nicht nötig.

Um die Verbindungsleitung gegenüber der Umgebung abzudichten, so daß der durch die Verbindungsleitung geführte Teilstrom des Retentats nicht an die Umgebung gelangt, ist vorzugsweise in der Bohrung ein elastisches Dichtelement zur Abdeckung wenigstens des Kopfes der Gewindeschraube gegenüber der Umgebung vorgesehen, wobei dieses Dichtelememt beispielsweise ein sogenannter O-Ring sein kann.

Um sicherzustellen, daß sowohl ein ungestörter Eintritt des zu trennenden Mediums (des sogenannten Feeds) als auch ein ungestörter Austritt des Retentats auf der entgegengesetzten Seite des Membrankörpers in den jeweiligen Verschlußkörpern möglich ist, wird der Verschlußkörper buchsenartig ausgebildet, wobei im in den Verschlußkörper eingesetzten Zustand des Membrankörpers ein Retentatraum bzw. ein Zuführraum für das Medium verbleibt.

Grundsätzlich ist es möglich und vielfach auch üblich, beide Enden des Membrankörpers in den jeweiligen Verschlußkörpern dichtend durch Klebung einzusetzen. Dieses kann bisweilen mit erheblichem Herstellungsaufwand und Herstellungskosten verbunden sein. Aus diesem Grunde ist es vorteilhaft, daß der Membrankörper wenigstens gegenüber dem an seinem retentatseitigen Ende angebrachten Verschlußkörper mit einem elastomeren Dichtmittel abgedichtet ist, wobei dieses Dichtmittel vorzugsweise ein O-Ring ist, so daß die sonst übliche zweite Klebestelle vermieden wird.

Für bestimmte Anwendungsfälle, in denen eine größere Membranfläche für die Trenn- bzw. Trocknungsaufgabe nötig ist, ist es vorteilhaft, einen Adapterkörper vorzusehen, mit dem zwei Enden von jeweils gesonderten Membrankörpern nach Art einer Reihenschaltung miteinander aufnehmbar und verbindbar sind, wobei durch Vorsehen einer entsprechenden Mehrzahl von Adapterkörpern entsprechend viele Membrankörper nach Art einer Reibenschaltung zusammengefügt werden können. Der Adapterkörper selbst ist vom Grundaufbau ähnlich aufgebaut wie der Verschlußkörper.

Um sicherzustellen, daß auch beim Vorsehen eines Adapterkörpers, beispielsweise beim Zusammenschalten zweier Membrankörper, der Retentatteilstrom bzw. der Spülmediumstrom an beiden Membrankörpern im Gegenstrom vorbeiströmen kann, weist der Adapterkörper wenigstens eine diesen vollständig von der einen Seite, in der jeweils ein Membrankörper eingesetzt ist, zu anderen Seite, in der der andere Membrankörper eingesetzt ist, durchquerende Verbindungsleitung für die Leitung des Permeats und des Teilstroms des Retentats auf. Somit ist sichergestellt, daß der Retentatteilstrom bzw. Spülgasstrom vollständig an der gesamten Länge beider oder mehrerer hintereinander geschalteter Membrankörper vorbeiströmen kann.

Grundsätzlich kann der Verschlußkörper, der Adapterkörper oder auch der Gehäusekörper aus beliebigen geeigneten Werkstoffen hergestellt sein, es hat sich jedoch als vorteilhaft herausgestellt, aufgrund der großen chemischen Beständigkeit gegenüber einer Vielzahl von mit der Vorrichtung zu behandelnden Medien diese aus Kunststoff auszubilden, insbesondere vorteilhafterweise aus einem Kunststoff in Form von Polypropylen.

Um in diesem Falle sicherzustellen, daß der für die Dosierung des Retentatteilstromes bzw. des Spülgasstromes wichtige Querschnitt in der Verbindungsleitung nicht durch Ausdehnung bzw. Schrumpfung des Kunststoff-Werkstoffes, beispielsweise durch Temperatureinwirkung oder durch Fließen des Werkstoffs unter der durch das schraubenförmige Verstellmittel ausgeübten Kraft, nicht verändert wird, ist die Verwendung faserverstärkten Kunststoffs sehr vorteilhaft, wobei in diesem Zusammenhang erfolgreiche Versuche mit einem 30%igen Glasfaseranteil bei einem Kunststoff in Form von Polypropylen verlaufen sind.

Um die einzelnen Elemente der Vorrichtung sehr kostengünstig und sehr formgenau herstellen zu können, hat es sich erwiesen, daß die Verwendung spritzfähigen Kunststoffs äußerst vorteilhaft ist.

Die Erfindung wird nun unter Bezugnahme auf die nachfolgenden schematischen Zeichnungen anhand eines Ausführungsbeispieles eingehend beschrieben. Darin zeigen:
- Fig. 1: in einer Seitenansicht im Schnitt eine Vorrichtung zum Trennen von flüssigen oder gasförmigen Medien,
- Fig. 2: in vergrößerter Darstellung im Schnitt einen retentatseitigen Verschlußkörper,
- Fig. 3: in vergrößerter Darstellung im Schnitt einen medium- bzw. feedseitigen Verschlußkörper,
- Fig. 4: in vergrößerter Darstellung einen im Schnitt abgebildeten Verschlußkörper, der sowohl als retentatseitiger Verschlußkörper als auch als medium- bzw. feedseitiger Verschlußkörper verwendet werden kann,
- Fig. 5: in vergrößerter Darstellung einen Ausschnitt im Mündungsbereich der Verbindungsleitung in den retentatseitigen Verschlußkörper, wobei unter Weglassung übriger Bereiche der Bereich des Eingriffs des Verstellmittels in die Verbindungsleitung gezeigt ist,
- Fig. 6: eine Darstellung gemäß Fig. 5, bei der jedoch in den Bereich des Eingriffs des Verstellmittels in die Verbindungsleitung eine gesonderte Buchse in eine Bohrung eingesetzt ist,
- Fig. 7: eine Darstellung gemäß Fig. 5, bei der jedoch ein Verstellmittel in Eingriffsstellung in die Verbindungsleitung dargestellt ist,
- Fig. 8: in vergrößerter Darstellung im Schnitt ein Adapterkörper, mit dem zwei Membrankörper verbunden werden können bzw. zwei Membrankörper in diesem aufgenommen werden können,
- Fig. 9: eine Seitenansicht der Darstellung gemäß Fig. 8,

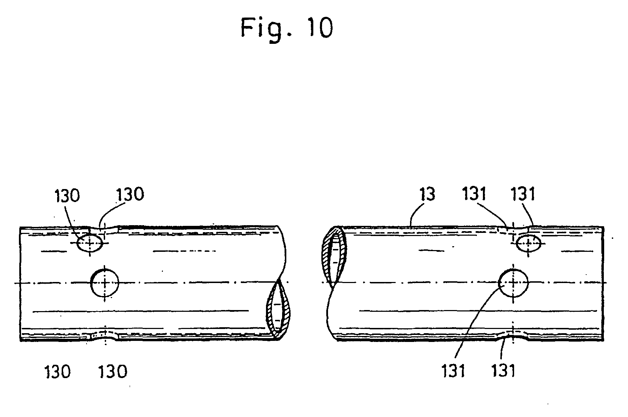

- Fig. 10: in vergrößerter Darstellung ein in Form eines Rohres ausgebildetes Gehäuse der Vorrichtung,
- Fig. 11: einen Querschnitt durch ein mechanisch wirkendes Drossel- und/oder Verschlußorgan zur Reduzierung des Permeatstromes gemäß der Erfindung und
- Fig. 12: einen Querschnitt gemäß Schnittlinie XII-XII in Figur 11.

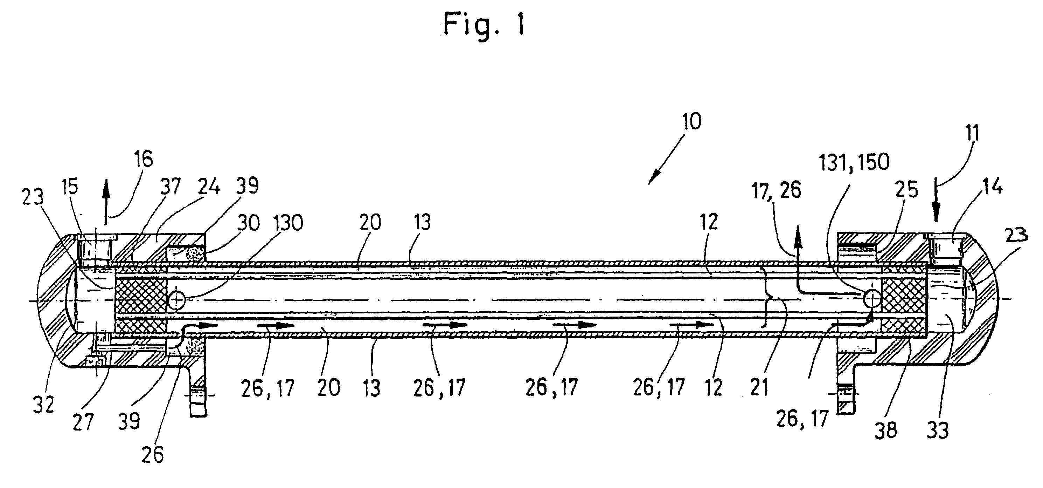

Unter Bezugnahme auf den in Fig. 1 dargestellten Grundaufbau der Vorrichtung (10) wird diese nachfolgend beschrieben. Die Vorrichtung (10), die zum Filtern und Trennen von flüssigen oder gasförmigen Medien (11) oder auch in einem besonderen Anwendungsfall zum Trocknen gasförmiger Medien (11) dient, umfaßt Membranen (12), die nach dem Prinzip der Hohlfadenmembranen (12) ausgebildet sind. Bei den Hohlfadenmembranen (12) strömt das Medium (11) durch das Lumen der regelmäßig in Form eines Bündels angeordneten Hohlfadenmembranen (12) .

In Fig. 1 sind lediglich symbolisch zwei Hohlfadenmembranen (12) dargestellt, in Wirklichkeit handelt es sich jedoch, wie gesagt, um ein Bündel von Hohlfadenmembranene wobei die Enden der Bündel aus Hohlfadenmembranen (12) auf geeignete Weise mit Endkörpern (37), (38) versehen sind, die beispielsweise aus einem geeigneten Gießharz bestehen Die unmittelbaren freien Endflächen der Endkörper (37), (38) sind derart bearbeitet, daß die Eintrittsöffnungen der Hohlfadenmembranen (12) freiliegen, so daß das zu trennende Medium (11) von seinem einen Ende (23) zu seinem anderen Ende (24) strömen kann. Dabei permeiert der eine Anteil des Mediums (11) durch die Membran (12) und verläßt diese als Permeat (17), wohingegen das Retentat (16) bis zum Ende (22) strömt und sich infolge seiner Abreicherung bezüglich der die Membran (12) durchquerenden Stoffe, die auf der Abströmseite der Membran (12), wie gesagt, als Permeat austreten, anreichert, wobei das Retentat (16) die Vorrichtung (10) über den Auslaß (15) verläßt. Da der Mechanismus derartiger Vorrichtungen (10), die vereinfacht etwas unscharf auch Membranmodule genannt werden, an sich im Stand der Technik bekannt sind, wird an dieser Stelle darauf nicht weiter eingegangen, was gleichzeitig für den aus Endkörpern (37), (38) sowie den Membranen (12) den aus Endkörpern (37), (38) sowie den Membranen (12) gebildeten Membrankörper (21) gilt.

Die weiterfolgende Beschreibung der Vorrichtung (10) bezieht sich auf einen Membrankörper (21) aus bündelförmig angeordneten Hohlfadenmembranen (12). Grundsätzlich sind aber auch beliebige andere geeignete Membranen für den Aufbau der Vorrichtung (10) geeignet, beispielsweise gewickelte Flachmembranen, die als sogenannte Wickelmodule bekannt sind.

Um den Membrankörper (21) herum ist ein Gehäuse (13), das hier rohrförmig ausgebildet ist, angeordnet und hat im wesentlichen eine axiale Länge entsprechend der Länge des Membrankörpers (21). Beide Enden (22), (23) des Membrankörpers (21) einschließlich des den Membrankörper (21) umgebenden Gehäuses (13) sind in jeweilige Verschlußkörper (24), (25) eingesetzt, die eine buchsenförmige Struktur aufweisen. Die Verschlußkörper (24), (25) begrenzen quasi die Enden (22), (23) des Membrankörpers (21) sowie des Gehäuses (13). Bei im in den Verschlußkörper (24), (25) eingesetzten Zustand des Membrankörpers verbleibt ein jeweiliger Retentatraum (32) bzw. ein Zufuhrraum (33) für das Medium (11). In den Zufuhrraum (33) strömt das Medium (11), das auf bekannte Weise in die Stirnfläche der Hohlfadenmembranen (12) eintritt, wohingegen das Retentat (16) auf bekannte Weise aus der Stirnfläche der Hohlfadenmembran (12) in den Retentatraum (32) eintritt.

Der Verschlußkörper (25) weist einen Einlaß (14) für den Eintritt des Mediums (11) auf, der in den zuvor erwähnten Zufuhrraum (33) (Feedraum) mündet. Dementsprechend mündet das andere Ende (23) des Membrankörpers (21) in den Retentatraum (32), der im Verschlußkörper (24) ausgebildet ist, wobei das Retentat (16) den Retentatraum (32) über einen Auslaß (15) verlassen kann.

Das rohrförmige Gehäuse (13) weist an seinen beiden Endkörpern (37), (38), und zwar im Bereich der beiden den Endkörpern (37), (38) zugewandten Seiten des Gehäuses (13), eine Mehrzahl radial verteilter Löcher (130), (131) auf, wobei durch die Löcher (130) ein Teilstrom (26) des im Retentatraum (32) gesammelten Retentats (16) in den Gehäuseinnenraum (20) eintritt und im Gegenstrom zum Medium (11) längs des Membrankörpers (21) in Pfeilrichtung strömt und aus den Löchern (131) wieder austritt, wobei die Löcher (131), auch den Auslaß (150) für das Permeat (17) bilden. Auf das Strömungsverhalten wird im einzelnen noch weiter unten eingegangen.

Am zufuhrseitigen Ende des Membrankörpers (21) sowie des den Membrankörper (21) umgebenden rohrförmigen Gehäuses (13), wobei dieses zufuhrseitige Ende in Fig. 1 die rechte Seite bildet, ist die Einheit aus Gehäuse (13) und Membrankörper (21) dichtend in dem dortigen Verschlußkörper (25) in einer buchsenförmigen Öffnung angeordnet. Diese Abdichtung kann beispielsweise bei geeignet gewählten werkstoffen durch Reibschweißung des das Gehäuse (13) bildenden Rohres mit dem Werkstoff des Verschlußkörpers (25) erzeugt werden oder aber auch auf beliebige andere Weise, beispielsweise mittels Klebung und dergleichen.

Im retentatseitigen Ende der Einheit aus Membrankörper (21) und Gehäuse (13), wobei dieses in Fig. 1 das linke Ende bildet, ist die buchsenartige Öffnung des dortigen Verschlußkörpers (24) mittels eines Dichtelementes (13), beispielsweise in Form O-Ringes, unter Bildung eines Teilstromraumes (39) abgedichtet. Auf eine weitergehende Dichtung des rohrförmigen Gehäuses (13) gegenüber dem dortigen Verschlußkörper (24) kann verzichtet werden. Das Dichtelement (30) ist derart im Verschlußkörper (24) eingesetzt, daß von einer Verbindungsleitung (27), die den Raum (32) im Verschlußkörper (24) und den Teilstromraum (39) zwischen Dichtelement (30) und der gegenüberliegenden Endfläche des Verschlußkörpers (24) verbindet, ein Teilstrom (26) aus Retentat (16) eintreten kann und, wie oben schon angedeutet, durch die Löcher (130) in den Gehäuseinnenraum (20) eintreten kann.

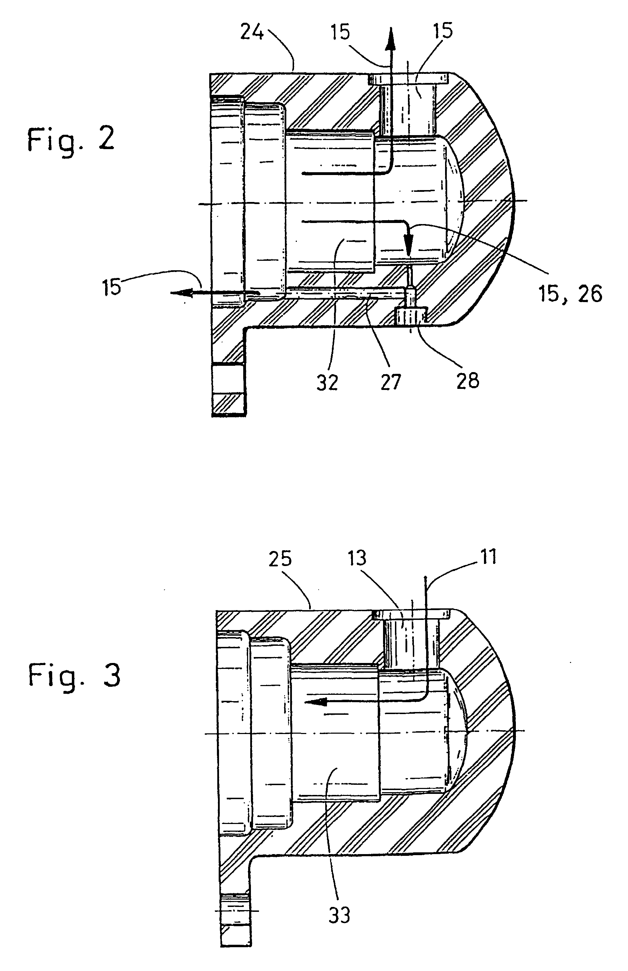

Die Verbindungsleitung (27) weist einen radialen Abschnitt auf und einen axialen Abschnitt, was im einzelnen in Fig. 2 aufgrund der dortigen vergrößerten Darstellung des Verschlußkörpers (24) gut sichtbar ist. Die Verbindungsleitung (27) ist somit winkelförmig ausgebildet, wobei in den Scheitel des Winkels ein Verstellmittel (28) eingreifen kann, so daß durch geeignete Verstellung des Verstellmittels (28) der Durchflußquerschnitt der Verbindungsleitung (27) eingestellt werden kann. Es wird in diesem Falle gesondert Bezug genommen auf die Darstellung gemäß den Fig. (5), (6) und (7), wo unterschiedliche Arten der in diesem Bereich angeordneten Verstellmittel (28) in vergrößerter Darstellung sichtbar sind.

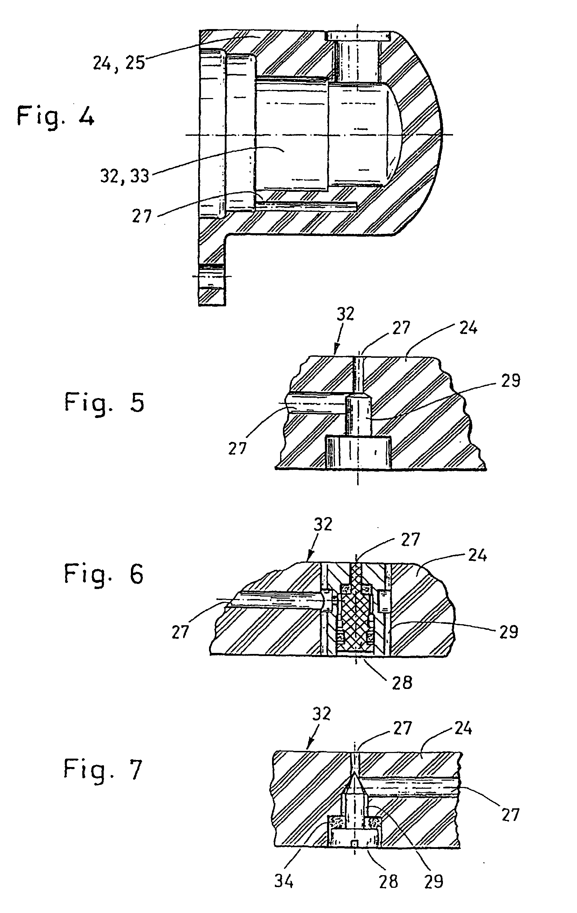

Fig. 5 zeigt eine Bohrung (29), die in den Scheitel der winkelförmigen Verbindungsleitung (27) mündet. Gemäß der Darstellung von Fig. 7 kann bei in der Bohrung (29) geeignet ausgebildetem Gewinde ein Verstellmittel (28) eingesetzt werden, beispielsweise in Form einer gewöhnlichen Gewindeschraube, die an ihrer Spritze geeignet angespitzt ist, um so eine feindosierbare Querschnittsveränderung der Verbindungsleitung (27) durch entsprechende Verdrehung des schraubenförmigen Verstellmittels (28) sicherzustellen.

Es ist aber auch gemäß Fig. 6 möglich, für den radialen Teil der Verbindungsleitung (27) eine zylindrische oder geeignete andere durchgehende Bohrung vorzusehen, in die beispielsweise eine gesonderte Buchse einsetzbar ist, in der wiederum ein Verstellmittel (28) einsetzbar ist, wobei die unterschiedlichen Ausgestaltungen gemäß den _{F}ig. 6 und 7 auch in Abhängigkeit von der unterschiedlichen Werkstoffwahl für die Ausbildung des Verschlußkörpers (24) gewählt bzw. festgelegt werden. Es ist beispielsweise auch möglich, anstelle eines in der Bohrung (29) vorzusehenden Gewindes eine Gewindeschraube als Verstellmittel (28) zu wählen, die selbstschneidende Eigenschaften hat, d.h. beim Eindrehen in die Bohrung das entsprechende Innengewinde in der Bohrung (29) selbst schneidet.

Fig. 3 zeigt den Verschlußkörper (25), der am zufuhrseitigen bzw. feedseitigen Ende der Einheit aus Membrankörper (21) und Gehäuse (13) vorgesehen ist. Wie ein Vergleich zwischen der Darstellung von Fig. 2 und 3 zeigt, sind, bis auf die Verbindungsleitung (27) und die Bohrung (29), beide Verschlußkörper (24), (25) identisch ausbildbar. Aus diesem Grunde bietet es sich an, wie beispielsweise in Fig. 4 dargestellt, herstellungsseitig beide Verschlußkörper (24), (25) identisch auszubilden, beispielsweise gemäß dem Aufbau von Fig. 4, bei dem die Verbindungsleitung (27) lediglich zunächst ihren axialen Abschnitt aufweist und für die Ausbildung des radialen Abschnittes die radiale Bohrung (29) im Bedarfsfalle gesondert vorgesehen wird. Insofern könnten beide Verschlußkörper (24), (25) zunächst identisch ausgebildet werden, was die Herstellungs- und Bevorratungskosten für die Vorrichtung (10) erheblich reduzieren würde.

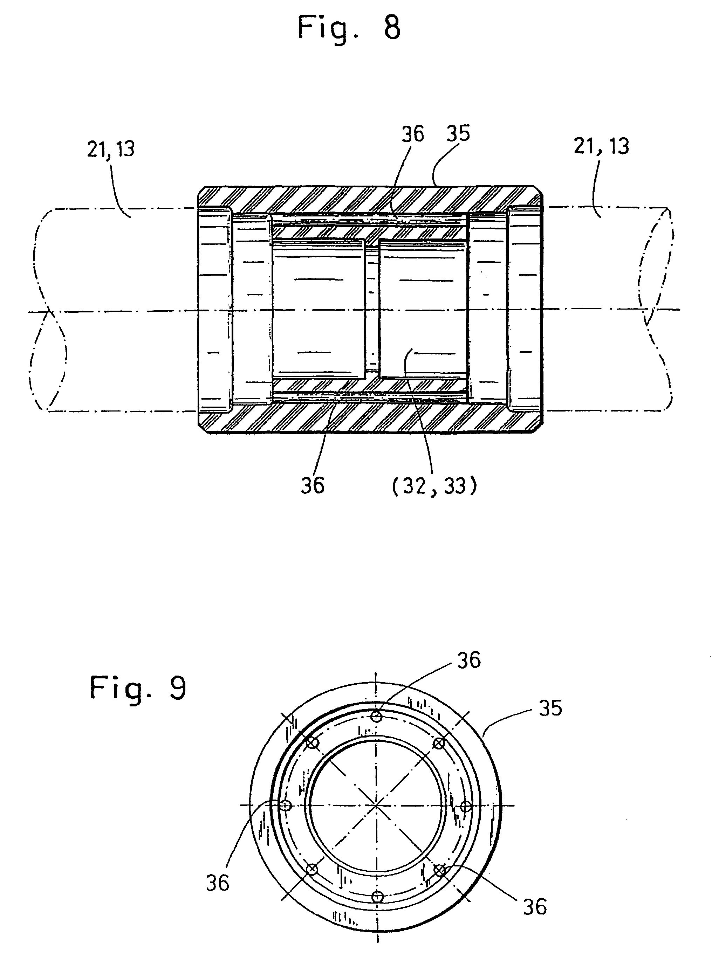

In Fig. 8 ist ein Adapterkörper (35) dargestellt, der einen ähnlichen Aufbau wie die zuvor beschriebenen Verschlußkörper (24), (25) aufweist. Es besteht nur der Unterschied, daß im Adapterkörper (35) der Einlaß (14) bzw. Auslaß (15) als in jeweiliger axialer Verlängerung, bei einer Ansicht auf die jeweiligen Öffnungsseiten, angeordnet anzusehen ist. Mittels des Adapterkörpers (35) können beispielsweise zwei Enden (22), (23) von zwei Membrankörpern (12) sowie der die Membrankörper (12) umgebenden Gehäuserohre (13) nach Art eine Reihenschaltung miteinander verbunden werden, wobei die jeweiligen Enden (22), (23) der Membrankörper in den entsprechenden buchsenartigen Öffnungen des Adapterkörpers (35) aufnehmbar sind. Die jeweiligen Membrankörper (21) und die sie umgebenden rohrförmigen Gehäuse (13) sind andeutungsweise strichpunktiert dargestellt.

Der Adapterkörper (35) weist eine Mehrzahl von Verbindungsleitungen (36) auf, die in gleichem radialen Abstand von der Achse des Adapterkörpers (35) angeordnet sind. Diese Verbindungsleitungen (36) gewährleisten das Durchströmen des Permeats (17) sowie des Retentatteilstroms (26), das von der Verbindungsleitung (27) aus dem retentatseitigen Verschlußkörper (24) herangeführt wird. Mittels des Adapterkörpers (35) kann bei entsprechender Mehrzahl von herangezogenen Adapterkörpern (35) an sich eine beliebige Zahl von Membrankörpern (21) hintereinandergeschaltet werden, wobei jeweils beide Enden des so gebildeten Gesamtkörpers wiederum mit den jeweiligen Verschlußkörpern (24) und (25) abgeschlossen werden.

In Funktion wird der Vorrichtung (10) über den Einlaß (14) das zu trennende Medium (11) (Feed) zugeführt. Das Medium (11) durchströmt das Lumen der Hohlfadenmembranen (12), wobei der durch die Membranen (12) permeierende Bestandteil des Mediums (11) als Permeat (17) austritt, und zwar in den Gehäuseinnenraum (20). Das Retentat (16) verläßt über den Auslaß (15) die Vorrichtung (10), wobei über die im Verschlußkörper (24) ausgebildete Verbindungsleitung (27) ein Retentatteilstrom (26) abgezweigt wird und über die Löcher (130) ebenfalls in den Gehäuseinnenraum (20) eintritt.

Zur Flußregelung und zur Entspannung des Retentats (16), wenn dieses beispielsweise Druckluft ist, auf Umgebungsdruck, ist mittels des zuvor beschriebenen Verstellmittels (28) eine Einstellung möglich. Eine Abdichtung des schraubenförmigen Dichtelements (30) gegenüber der Umgebung ist mit einem Dichtmittel (34) in Form eines O-Rings gewährleistet. Das als Spülmittel wirkende Retentat (16) des Teilstromes (26) strömt zusammen mit dem Permeat (17) im Gegenstrom zum im Membrankörper (21) strömenden Medium (11) und tritt an der Seite des Verschlußkörpers (25) als Gemisch als Permeat (17) und Retentatteilstrom (26) durch die dortigen Löcher (131) aus, die somit auch gleichzeitig Auslaß (150) des Permeats (17) sind.

Alternativ oder ergänzend zu den bislang beschriebenen Ausführungsformen kann die Vorrichtung (10) auch zum Trocknen bzw. Entfeuchten von Druckluft verwendet werden. Hierzu wird für einen bestimmten Betriebsdruck - wie oben beschrieben wurde - ein bestimmter Volumenstrom des Permeats (17) mit der Drosselschraube eingestellt, um eine vorgebbare Entfeuchtungsleistung zu erreichen. Dieser Permeatstrom in der eingestellten Größe fließt unabhängig davon, ob ein Retentatstrom benötigt wird, so daß im Teillast- und im Nullastfall, d.h. bei der Aufgabe eines Feedstromes, der geringer als der des Nennzustandes ist, unnötige Retentatverluste in einer erheblichen Größenordnung auftreten. Die im folgenden beschriebene Vorrichtung gewährleistet auf einfachem Wege eine starke Verminderung von Retentatverlusten im Nullastfall und kann zusätzlich eine Reduzierung des Permeatstromes bei einem gegenüber dem Nennzustand verringerten Retentatstrom (Teillastfall) ermöglichen.

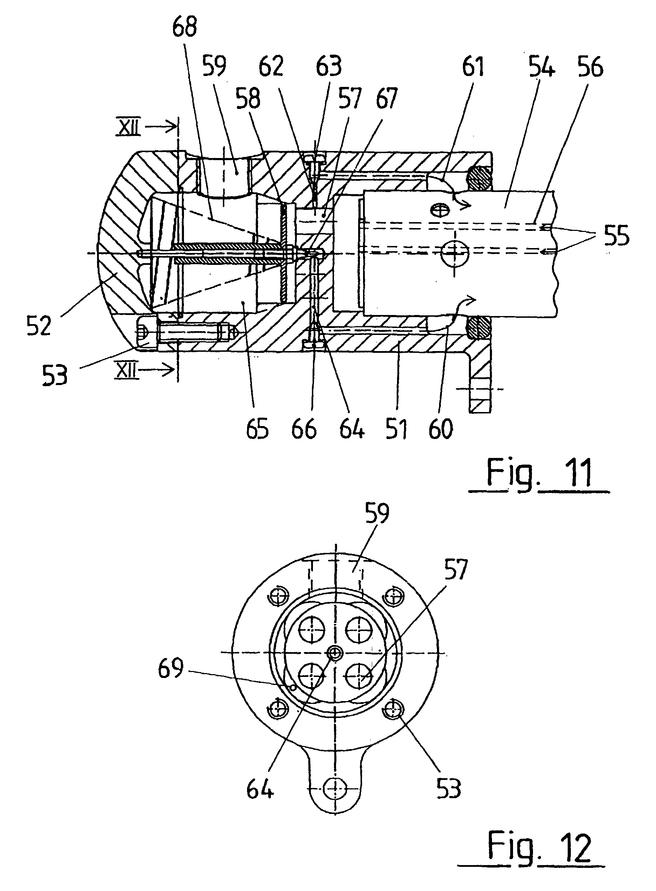

Die Wirkungsweise dieser Vorrichtung wird anhand der in Fig. 11 und Fig. 12 dargestellten Schnittbilder erläutert. Die im folgenden erläuterte Vorrichtung beruht auf einer Modifikation des retentatseitigen Verschlußkörpers (siehe auch den Verschlußkörper (24) aus Fig. 1), im folgenden vereinfacht als Retentatkappe bezeichnet, in die die weitere nachstehend beschriebene Vorrichtungskomponente integriert wird. Fig. 11 enthält die schematisch dargestellte Modifikation der Retentatkappe im Längsschnitt. Im Gegensatz zur bereits beschriebenen Version in Fig. 2 ist die neue Retentatkappe zweigeteilt und besteht aus einem Unterteil (51) und einem Oberteil (52), welche z.B. durch die dargestellten Schrauben (53) verbunden werden. Das Membranmodul (54) wird wie oben beschrieben in dem Kappenunterteil (51) fixiert, z.B. durch Klebung, Reibschweißung oder eine andere Verbindungstechnik.

Der Retentatstrom strömt durch Membranhohlfäden (56) - auch hier sind exemplarisch nur zwei Hohlfäden (56) dargestellt - und gelangt über Durchtrittsöffnungen (57) an einem Strömungssensor (58) vorbei durch eine Auslaßbohrung (59) aus dem Retentatkopf heraus. Der Permeatstrom besteht aus zwei Anteilen, nämlich einem Hauptspülgasstrom (60) und einem Grundspülgasstrom (61). Der Grundspülgasstrom (61) fließt ständig, sofern ein Retentatstrom vorhanden ist, dessen Druck größer als der der Umgebung ist. Der Grundspülgasstrom wird über eine Bohrung (62) direkt aus dem Retentat entnommen. Sein Volumenstrom kann durch eine feste oder einstellbare Drossel (63) bestimmt werden und wird über Kanäle dem Mantelraum des Membranmoduls (54) zugeführt. Der Hauptspülgasstrom (60) kann über einen weiteren Strömungskanal (64) aus einem freien Volumen (65) des Retentatkopfes entnommen werden. Er fließt nur, wenn der Strömungssensor (58) den Strömungskanal (64) freigibt. Die hier vorstehend erläuterte Vorrichtungskomponente kann komplett in die in Fig. 11 dargestellte Retentatkappe integriert werden, deren Ausführung sich an die in Fig. 2 dargestellte Retentatkappe anlehnen kann.

Eine ständige Trocknungsbereitschaft des Membrantrockners auch bei Nullast ist durch das ständige Fließen des sog. Grundspülgasstromes (61) gegeben, welcher nur einen geringen Anteil am gesamten Permeatstrom- bestehend aus dem Grund- und dem Hauptspülgasstrom (60,61) - ausmacht. Der Grundspülgasstrom (61) verhindert das Eindringen von feuchter Umgebungsluft in die offenen Bohrungen des Mantelrohres des Moduls. Durch dieses Trockenhalten des Mantelraumes ist eine ständige Betriebsbereitschaft des Membrantrockners gegeben, ohne daß eine erhebliche Überhöhung des Feuchtigkeitsgehaltes des Retentates bei einem Wechsel von Nullast auf Teil- oder Vollast auftreten kann.

Den größten Anteil am Permeat weist der Hauptspülgasstrom (60) auf. Das Hauptziel der Nutzung der zusätzlichen Vorrichtungskomponente besteht in einer Anpassung dieses Hauptspülgasstromes (60) an die Retentat-Entnahmemenge des Membrantrockers, um eine Minimierung der Retentatverluste zu erreichen. Eine Einstellung des Hauptspülgasstromes (60) kann mit einem Drosselventil (66) und einem Hauptspülgasdosierer (67) erfolgen.

Das Fließen des Hauptspülgasstromes (60) wird durch das Freigeben des Strömungskanals (64) durch einen Hauptspülgasdosierer (67) ermöglicht. Dieser befindet sich am z.B. scheibenförmig ausgeführten Strömungssensor (58), dessen axiale Bewegung über Führungen ermöglicht wird. Bei vertikaler Einbaulage erfolgt das Schließen des Strömungskanals (64) durch das Eigengewicht des Strömungssensors (58). Der Strömungssensor (58) ist somit rein mechanisch ausgebildet und weist einen integrierten Hauptspülgasdosierer (67) auf. Dieser Strömungssensor (58) kann zusätzlich durch eine axialwirkende Feder (68) belastet werden. Dieses ermöglicht auch eine beliebige Einbaulage des Membrantrockers.

Eine Nichtentnahme von Retentat über die Austrittsöffnung (59), d.h. der sog. Nullastfall, führt dazu, daß sich der oberhalb und unterhalb des Strömungssensors wirkende Retentatdruck angleicht und der Hauptspülgasdosierer (67) durch die Feder (68) und ggf. durch das Eigengewicht von Strömungssensor (58) und Hauptspülgasdosierer (67) den Strömungskanal (64) verschließt. Hierdurch werden ein Fließen des Hauptspülgasstromes (60) und durch ihn verursachte Retentatverluste unterbunden.

Eine Retentatentnahme über die Öffnung (59) führt zu einem Absinken des Druckes im freien Volumen (65) oberhalb des Strömungssensors (58). Hierdurch wirkt am Strömungssensor (58) ein Differenzdruck, welcher, transformiert über die relativ große freie Fläche des Strömungssensors (58), zu axialen Kräften führt, welche den Strömungssensor (58) und den mit ihm verbundenen Hauptspülgasdosierer (67) entgegen der Kraft der Feder (68) und ggf. der Schwerkraft bewegen und somit den Strömungskanal (64) freigeben. Hierdurch wird das Fließen des Hauptpermeatstroms (60) ermöglicht.

Unterschiedliche Ausführungen des Hauptspülgasdosierers (67) und der Aufnahme des Strömungssensors (58) im Unterteil (51) des Retentatkopfes ermöglichen eine Anpassung des Hauptspülgasstromes (60) an die Menge des über die Austrittsöffnung (59) entnommenen Retentatstromes. Hierdurch ist auch in vom Null- und Vollastfall abweichenden Betriebszuständen, den sog. Teillastfällen, eine Verminderung der Retentatverluste durch eine Reduzierung des Gesamtpermeatstromes möglich. Dieses kann z.B., wie es in Fig. 11 dargestellt ist, durch eine dem bekannten Prinzip des Nadelventils entsprechende Gestaltung des Hauptpermeatdosierers (67) erreicht werden. Die Aufnahme des Strömungssensors (58) im Unterteil (51) des Retentatkopfes kann mit sich axial erweiternden Durchtrittsöffnungen (69) versehen sein. Diese können - zusätzlich zur Wirkungsweise des Hauptspülgasdosierers (67) - , eine Anpassung des Hauptspülgasstromes (60) an die Menge des über die Austrittsöffnung (59) entnommenen Retantatstromes ermöglichen.

## Patentansprüche

1. Vorrichtung zum Filtern und Trennen von flüssigen und gasförmigen Medien (11) und/oder zum Trocknen von gasförmigen Medien (1) unter Anwendung von Membranen (12), umfassend ein Gehäuse (13) mit einem Einlaß für das zu trennende Medium (11) und einen Auslaß für das Retentat (16) sowie einen Permeatauslaß, wobei im Gehäuseinnenraum (20) ein Membrankörper (21) angeordnet ist, dessen beide Enden mit jeweils einem verschlußkörper (24,25) begrenzbar sind, und wobei ein Teilstrom des vorrichtungsseitig erzeugbaren Retentats (16) zur Erzeugung eines Unterdrucks der Membran (12) permeatseitig zuführbar ist, **dadurch gekennzeichnet, daß** wenigstens einer der Verschlußkörper (24,25), in welchem der Retentatauslaß (18) angeordnet ist, zwei verschlußkörperseitige Verbindungsleitungen (62,64) aufweist, die den Teilstrom (26) des Retentats (16) aufnehmen, der vom Retentataustrittsbereich aus dem Membrankörper (21) zum Gehäuseinnenraum (20) strömt, in den das Permeat (17) eintritt, wobei in der einen Verbindungsleitung (64) ein Strömungssensor (58) angeordnet ist.

2. Vorrichtung nach Anspruch 1, **dadurch gekennzeichnet, daß** der Membrankörper (21) durch eine Mehrzahl von Hohlfasermembranen (12) gebildet wird.

3. Vorrichtung nach Anspruch 1, **dadurch gekennzeichnet, daß** der Membrankörper (21) durch eine aufgewickelte Membran (12) (Wickelmembran) gebildet wird.

4. Vorrichtung nach einem oder mehreren der Ansprüche 1 bis 3, **dadurch gekennzeichnet, daß** in die Verbindungsleitung (27) ein mittels nach Art eines ventils wirkendes Verstellmittel (28) eingesetzt ist.

5. Vorrichtung nach Anspruch 4, **dadurch gekennzeichnet, daß** das Verstellmittel (28) durch eine Gewindeschraube gebildet wird, die in einen in einer Bohrung (29) entsprechend ausgebildeten Gewindesitz im Verschlußkörper (24,25) eingreift.

6. Vorrichtung nach Anspruch 4, **dadurch gekennzeichnet, daß** das Verstellmittel (28) durch eine selbstschneidende Gewindeschraube gebildet wird, die sich beim Eindrehen in eine Bohrung (29) in dieser selbstschneidend einen Gewindesitz schafft.

7. Vorrichtung nach Anspruch 4, **dadurch gekennzeichnet, daß** das Verstellmittel (28) als feste Drossel ausgeführt ist.

8. Vorrichtung nach einem der Ansprüche 5 bis 7, **dadurch gekennzeichnet, daß** in der Bohrung (29) ein elastisches Dichtelement (34) zur Abdichtung
wenigstens des Kopfes (31) der Gewindeschraube (28) gegenüber der Umgebung vorgesehen ist.

9. Vorrichtung nach einem oder mehreren der Ansprüche 1 bis 8, **dadurch gekennzeichnet, daß** der Verschlußkörper (24,25) buchsenartig ausgebildet ist, wobei bei im in den Verschlußkörper (24,25) eingesetzten Zustand des Membranköpers (21) ein Retentatraum (32) oder ein Zufuhrraum (33) für das Medium (11) verbleibt.

10. Vorrichtung nach einem oder mehreren der Ansprüche 1 bis 9, **dadurch gekennzeichnet, daß** der Membrankörper (21) wenigstens gegenüber dem an seinem retentatseitigen Ende (22) angebrachten Verschlußkörper (24) mit einem elastomeren Dichtmittel (34) abgedichtet ist.

11. Vorrichtung nach Anspruch 10, **dadurch gekennzeichnet, daß** das Dichtmittel (34) ein O-Ring ist.

12. Vorrichtung nach einem oder mehreren der Ansprüche 1 bis 11, **dadurch gekennzeichnet, daß** mittels eines Adapterkörpers (35) zwei Enden (22,23) von Membrankörpern (12) nach Art einer Reihenschaltung miteinander aufnehmbar und verbindbar sind.

13. Vorrichtung nach Anspruch 12, **dadurch gekennzeichnet, daß** der Adapterkörper (35) wenigstens eine diesen vollständig von der einen Seite, in der der jeweils eine Membrankörper (21) eingesetzt ist, zur anderen Seite, in der der andere Membrankörper (21) eingesetzt ist, durchquerende Verbindungsleitung (36) für die Leitung des Teilstroms (26) des Retentats (16) aufweist.

14. Vorrichtung nach einem oder mehreren der Ansprüche 1 bis 13, **dadurch gekennzeichnet, daß** der Verschlußkörper (24, 25) aus Kunststoff besteht.

15. Vorrichtung nach einem oder mehreren der Ansprüche 1 bis 14, **dadurch gekennzeichnet, daß** der Adapterkörper (35) aus Kunststoff besteht.

16. Vorrichtung nach einem oder mehreren der Ansprüche 1 bis 15, **dadurch gekennzeichnet, daß** das Gehäuse (13) aus Kunststoff besteht.

17. Vorrichtung nach einem oder mehreren der Ansprüche 14 bis 16, **dadurch gekennzeichnet, daß** der Kunststoff Polypropylen ist.

18. Vorrichtung nach einem oder mehreren der Ansprüche 14 bis 17, **dadurch gekennzeichnet, daß** der Kunststoff faserverstärkt ist.

19. Vorrichtung nach einem oder mehreren der Ansprüche 14 bis 18, **dadurch gekennzeichnet, daß** der Kunststoff spritzfähiger Kunststoff ist.

20. Vorrichtung nach einem der Ansprüche 1 bis 19, **dadurch gekennzeichnet, daß** zur Festlegung eines volumenstromes eines Grundspülgasstromes (31) eine Drossel (63) verwendet ist.

21. vorrichtung nach einem der Ansprüche 1 bis 20, **dadurch gekennzeichnet, daß** für einen Hauptspülgasstrom (60) ein Strömungskanal (64) vorgesehen ist, in dessen Bereich der Strömungssensor (58) angeordnet ist.

22. vorrichtung nach einem der Ansprüche 1 bis 21, **dadurch gekennzeichnet, daß** zur Dosierung des Hauptspülgasstromes (60) ein Drosselventil (66) und ein Hauptspülgasdosierer (67) vorgesehen sind.

23. vorrichtung nach einem der Ansprüche 1 bis 22, **dadurch gekennzeichnet, daß** der Strömungssensor (58) von einer axial wirkenden Feder (68) beaufschlagt ist.

24. vorrichtung nach einem der Ansprüche 1 bis 23, **dadurch gekennzeichnet, daß** die Aufnahme des Strömungssensors (58) in der Retentatkappe sich axial erweiternde Öffnungen (69) aufweist.

## Claims

1. Device for filtering and separating liquid and gaseous media (11) and/or for drying gaseous media (1) using membranes (12), comprising a housing (13) with an inlet for the medium (11) to be separated and an outlet for the residue (16), and a permeate outlet, a membrane body (21), the two ends of which can each be delimited by a sealing body (24, 25), being arranged in the inner space (20) of the housing, and a partial flow of the residue (16) which can be generated on the device side being able to be fed to the permeate side to generate a low pressure of the membrane (12), **characterized in that** at least one of the sealing bodies (24, 25) in which the residue outlet (18) is arranged has on the sealing body side two connecting lines (62, 64), which receive the partial flow (26) of the residue (16), this partial flow flowing from the residue exit area out of the membrane body (21) to the housing inner space (20), into which the permeate (17) enters, a flow sensor (58) being arranged in one connecting line (64).

2. Device according to Claim 1, **characterized in that** the membrane body (21) is formed by multiple hollow fibre membranes (12).

3. Device according to Claim 1, **characterized in that** the membrane body (21) is formed by a wound membrane (12).

4. Device according to one or more of Claims 1 to 3, **characterized in that** an adjustment means (28) which acts by means of and like a valve is inserted in the connecting line (27) .

5. Device according to Claim 4, **characterized in that** the adjustment means (28) is in the form of a threaded bolt, which engages in the sealing body (24, 25) with a thread seat which is formed correspondingly in a hole (29).

6. Device according to Claim 4, **characterized in that** the adjustment means (28) is in the form of a self-tapping threaded bolt, which creates a thread seat by self-tapping as it is twisted into a hole (29).

7. Device according to Claim 4, **characterized in that** the adjustment means (28) is in the form of a fixed throttle.

8. Device according to one of Claims 5 to 7, **characterized in that** in the hole (29) an elastic sealing element (34) is provided to seal at least the head (31) of the threaded bolt (28) against the environment.

9. Device according to one or more of Claims 1 to 8, **characterized in that** the sealing body (24, 25) is in the form of a socket, a residue space (32) or feed space (33) for the medium (11) remaining when the membrane body (21) is in the state of having been inserted into the sealing body (24, 25).

10. Device according to one or more of Claims 1 to 9, **characterized in that** the membrane body (21) is sealed with an elastomeric sealing means (34) at least against the sealing body (24) which is attached on its residue end (22) .

11. Device according to Claim 10, **characterized in that** the sealing means (34) is an O-ring.

12. Device according to one or more of Claims 1 to 11, **characterized in that** by means of an adapter body (35) two ends (22, 23) of membrane bodies (12) can be held and connected to each other as in a series connection.

13. Device according to Claim 12, **characterized in that** the adapter body (35) has at least one connecting line (36), which crosses the adapter body (35) completely from one side, in which one membrane body (21) is inserted, to the other side, in which the other membrane body (21) is inserted, to carry the partial flow (26) of the residue (16).

14. Device according to one or more of Claims 1 to 13, **characterized in that** the sealing body (24, 25) consists of plastic.

15. Device according to one or more of Claims 1 to 14, **characterized in that** the adapter body (35) consists of plastic.

16. Device according to one or more of Claims 1 to 15, **characterized in that** the housing (13) consists of plastic.

17. Device according to one or more of Claims 14 to 16, **characterized in that** the plastic is polypropylene.

18. Device according to one or more of Claims 14 to 17, **characterized in that** the plastic is fibre-reinforced.

19. Device according to one or more of Claims 14 to 18, **characterized in that** the plastic is plastic which can be injected.

20. Device according to one of Claims 1 to 19, **characterized in that** to define a volume flow of a basic flushing gas flow (31), a throttle (63) is used.

21. Device according to one of Claims 1 to 20, **characterized in that** a flow channel (64), in the area of which the flow sensor (58) is arranged, is provided for a main flushing gas flow (60).

22. Device according to one of Claims 1 to 21, **characterized in that** to dose the main flushing gas flow (60), a throttle valve (66) and a main flushing gas doser (67) are provided.

23. Device according to one of Claims 1 to 22, **characterized in that** an axially acting spring (68) is applied to the flow sensor (58).

24. Device according to one of Claims 1 to 23, **characterized in that** the receptacle of the flow sensor (58) in the residue cap has openings (69) which extend axially.

## Revendications

1. Dispositif pour la filtration et la séparation de milieux liquides ou gazeux (11) et / ou pour le séchage de milieux gazeux (1) en faisant usage de membranes (12), dispositif comportant une enveloppe (13) avec une entrée pour le milieu à séparer (11) et avec une sortie pour le rétentat (16) ainsi qu'avec une sortie pour le perméat, un corps de membrane (21) étant aménagé dans l'espace intérieur de l'enveloppe (20) dont les deux extrémités peuvent être délimitées à l'aide des corps de fermeture respectifs (24, 25), et un flux partiel du rétentat (16) susceptible d'être produit par le dispositif pouvant être amené sur le côté du perméat vers la membrane (12) en vue de la création d'une dépression, **caractérisé en ce qu'**au moins l'un des corps de fermeture (24, 25), dans lequel est aménagée la sortie pour le rétentat (18), est garni, du côté des corps de fermeture, de deux conduites de connexion (62, 64) qui reçoivent le flux partiel (26) du rétentat (16) qui s'écoule hors du corps de la membrane (21) à partir de la région de la sortie du rétentat vers l'intérieur de l'enveloppe (20) dans lequel le perméat (17) entre, un capteur d'écoulement (58) étant aménagé dans l'une des conduites de connexion (64).

2. Dispositif suivant la revendication 1, **caractérisé en ce que** le corps de membrane (21) est formé par un grand nombre de membranes à fibres creuses (12).

3. Dispositif suivant la revendication 1, **caractérisé en ce que** le corps de membrane (21) est formé par une membrane enroulée (12) (diaphragme enroulé).

4. Dispositif suivant une ou plusieurs des revendications 1 à 3, **caractérisé en ce que** dans la conduite de connexion (27) est incorporé un moyen de réglage (28) agissant à la manière d'une soupape.

5. Dispositif suivant la revendication 4, **caractérisé en ce que** le moyen de réglage (28) est constitué d'une vis filetée qui s'engage dans un logement pour filetage façonné de manière à correspondre dans un alésage (29) dans le corps de fermeture (24, 25).

6. Dispositif suivant la revendication 4, **caractérisé en ce que** le moyen de réglage (28) est constitué d'une vis filetée autotaraudeuse qui, lors de la pose dans un alésage (29), se crée dans celui-ci un logement pour filetage par autotaraudage.

7. Dispositif suivant la revendication 4, **caractérisé en ce que** le moyen de réglage (28) est exécuté sous la forme d'une soupape d'étranglement fixe.

8. Dispositif suivant l'une quelconque des revendications 5 à 7, **caractérisé en ce qu'**un élément d'étanchéité élastique (34) est prévu dans l'alésage (29) en vue de l'étanchéification d'au moins la tête (31) de la vis filetée (28) par rapport à son entourage.

9. Dispositif suivant une ou plusieurs des revendications 1 à 8, **caractérisé en ce que** le corps de fermeture (24, 25) est façonné à la manière d'une douille, tout en réservant, dans l'état de montage du corps de membrane (21) dans le corps de fermeture (24, 25), une chambre à rétentat (32) ou une chambre d'amenée (33) pour le milieu (11).

10. Dispositif suivant une ou plusieurs des revendications 1 à 9, **caractérisé en ce que** le corps de membrane (21) est étanchéifié à l'aide d'un moyen d'étanchéité élastique (34) au moins par rapport au corps de fermeture (24) aménagé à son extrémité (22) située du côté du rétentat.

11. Dispositif suivant la revendication 10, **caractérisé en ce que** le moyen d'étanchéité élastique (34) consiste en un joint torique.

12. Dispositif suivant une ou plusieurs des revendications 1 à 11, **caractérisé en ce que** deux extrémités (22, 23) de corps de membrane (12) peuvent être reçues et reliées l'une à l'autre à la manière d'un montage en série au moyen d'un corps d'adaptation (35).

13. Dispositif suivant la revendication 12, **caractérisé en ce que** le corps d'adaptation (35) possède au moins une conduite de connexion (36) qui sert à conduire le flux partiel (26) du rétentat (36) et qui traverse complètement le corps d'adaptation (35) de l'une de ses extrémités, dans laquelle est montée l'un des corps de membrane (21) respectifs, vers l'autre de ses extrémités, dans laquelle est montée l'autre corps de membrane (21).

14. Dispositif suivant une ou plusieurs des revendications 1 à 13, **caractérisé en ce que** le corps de fermeture (24, 25) est constitué d'une matière plastique.

15. Dispositif suivant une ou plusieurs des revendications 1 à 14, **caractérisé en ce que** le corps d'adaptation (35) est constitué d'une matière plastique.

16. Dispositif suivant une ou plusieurs des revendications 1 à 15, **caractérisé en ce que** l'enveloppe (13) est constituée d'une matière plastique.

17. Dispositif suivant une ou plusieurs des revendications 14 à 16, **caractérisé en ce que** la matière plastique consiste en du polypropylène.

18. Dispositif suivant une ou plusieurs des revendications 14 à 17, **caractérisé en ce que** la matière plastique est renforcée au moyen de fibres.

19. Dispositif suivant une ou plusieurs des revendications 14 à 18, **caractérisé en ce que** la matière plastique consiste en une matière plastique susceptible d'être injectée.

20. Dispositif suivant l'une quelconque des revendications 1 à 14, **caractérisé en ce qu'**en vue de la détermination d'un flux volumique d'un courant de gaz de lavage de base (31) on utilise un clapet (63).

21. Dispositif suivant l'une quelconque des revendications 1 à 20, **caractérisé en ce que** pour un courant de gaz de lavage principal (60) il est prévu un canal d'écoulement (64) dans l'étendue duquel est aménagé le capteur d'écoulement (58).

22. Dispositif suivant l'une quelconque des revendications 1 à 21, **caractérisé en ce qu'**en vue du dosage du courant de gaz de lavage principal (60) sont prévus une soupape de modération (66) et un doseur du courant de gaz de lavage principal (67).

23. Dispositif suivant l'une quelconque des revendications 1 à 22, **caractérisé en ce que** le capteur d'écoulement (58) se trouve sous la charge d'un ressort (68) agissant axialement.

24. Dispositif suivant l'une quelconque des revendications 1 à 23, **caractérisé en ce que** le logement du capteur d'écoulement (58) dans le capuchon pour le rétentat est pourvu d'ouvertures (69) s'élargissant axialement.
